# EUROPEAN PATENT SPECIFICATION

(11) **EP 4 346 368 B1**
(45) Date of publication and mention of the grant of the patent: **15.04.2026**
(21) Application number: 22724154.4
(22) Date of filing: 09.05.2022
(51) Int. Cl.: A01D 34/00

(54) **A ROBOTIC LAWN MOWER WITH ENHANCED CUTTING PROPERTIES**
RASENMÄHROBOTER MIT VERBESSERTEN SCHNEIDEIGENSCHAFTEN
TONDEUSE À GAZON ROBOTISÉE AVEC DES PROPRIÉTÉS DE COUPE AMÉLIORÉES

(30) Priority: 28.05.2021 SE 2150683
(43) Date of publication of application: 10.04.2024
(73) Proprietor: HUSQVARNA AB, 561 82 Huskvarna (SE)
(72) Inventor: ALLARD, Martin, 561 46 HUSKVARNA (SE); SJÖGREN, Anders, 571 78 FORSERUM (SE); JOHANSSON, Jörgen, 553 39 JÖNKÖPING (SE); HOLGERSSON, Jonas, 561 40 HUSKVARNA (SE); HJELMÅKER, Olle, 555 94 JÖNKÖPING (SE); KÖPSÉN, Bo, 563 92 GRÄNNA (SE); WALL, Martin, 556 25 JÖNKÖPING (SE)
(86) International application number: PCT/SE2022/050449
(87) International publication number: WO 2022/250589

(56) References cited:
- WO-A1-2015/040987
- CN-U- 205 179 745
- JP-U- H0 656 803
- US-A1- 2019 307 067
- US-A1- 2020 120 865
- US-B2- 7 024 842

## Description

### TECHNICAL FIELD

The present disclosure relates to a robotic lawn mower that is adapted to operate within a certain operation area. The robotic lawn mower comprises a body, at least two drive wheels, at least one swivelable wheel, a control unit adapted to control the operation of the robotic lawn mower, a rotatable grass cutting disc having a rotation axis, and at least two electric motor arrangements.

### BACKGROUND

Robotic lawn mowers such as for example robotic lawn mowers are becoming increasingly more popular. A robotic lawn mower is usually battery-powered by means of a rechargeable battery and is adapted to cut grass on a user's lawn automatically. The robotic lawn mower can be charged automatically without intervention of the user, and does not need to be manually managed after being set once.

In a typical deployment a work area, such as a garden, park, sports field, golf court and the like, the work area is enclosed by a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK).

A problem associated with robotic lawn mowers is that they normally have a limited ability to cut grass close to objects and borders. That is, normally, the cutting unit is arranged at an underside of a lawn mower body of the robotic lawn mower and portions of the lawn mower body, and/or wheels attached thereto, may hinder the cutting unit from reaching grass close to objects and borders. If so, the cutting result is impaired because there will be uncut grass close to object such as trees, stones, furniture, building walls, and the like.

Another problem associated with robotic lawn mowers is a limited ability to cut relatively long grass, robotic lawn mowers having a limited ground clearance height due to safety reasons.

The document WO2015040987 A1 discloses a self-propelled lawn mower that is propelled due to torque from a running motor, comprising a rotating blade for cutting grass by rotating under power from a rotating blade motor. In a bottom view of the lawn mower's main body, at least a portion of where the running motor is disposed overlaps at least a portion of where the rotating blade motor is disposed.

It is therefore desired to provide means and a method for cutting grass close to objects and borders, and to cut relatively long grass.

### SUMMARY

The object of the present disclosure is to provide means and a method for cutting grass close to objects and borders, and to cut relatively long grass.

This object is achieved by means of robotic lawn mower having the features of claim 1.

In this way, the cutting disc is positioned such that it can move laterally in an arcuate manner when the drive wheels are driven in different rotation directions by the first electric motor arrangement. This enables the cutting disc to reach relatively close to a boundary.

According to some aspects, the rotation axis is positioned between the swivel attachment axis and the second end portion when the rotation axis passes through the cutting disc.

In this way, the cutting disc is positioned such that it can move laterally in an arcuate manner when the drive wheels are driven in different rotation directions by the first electric motor arrangement.

According to some aspects, the control unit is adapted to control the robotic lawn mower to move towards a boundary such that the first end portion approaches the boundary and to determine if a distance to the boundary fulfills a condition. When that is the case, the control unit is adapted to stop the robotic lawn mower, and to control the drive wheels to turn in mutually different directions such that the second end portion of the robotic lawn mower performs an arcuate movement along a cutting arc, enabling the cutting disc to cut grass within the cutting arc.

In this way, cutting the grass relatively close to the boundary is enabled.

According to some aspects, a center of the cutting arc is positioned along the drive wheel axis. According to some aspects, the center of the cutting arc is positioned in the center of the drive wheel axis.

This means that the arcuate movement can easily be performed by turning the drive wheels in mutually different directions.

According to some aspects, the boundary is in the form of a boundary wire defining an operation area for the robotic lawn mower, where the control unit is adapted to stop the robotic lawn mower (when the robotic lawn mower is positioned on the boundary wire. The condition relates to a determined distance between the boundary wire and the robotic lawn mower falling below a first threshold.

According to some aspects, the boundary is in the form of an object, where the cutting arc has a closest arc portion that is closest to the object, where the condition relates to a determined distance between the object and the robotic lawn mower falling below a second threshold.

Obviously, the boundary can be in many forms, while cutting the grass relatively close to the boundary still is enabled.

According to some aspects, the cutting arc has an angular extension that exceeds 180°, where the control unit is adapted to control the robotic lawn mower to continue moving when a second end center that has followed the extension of the cutting arc has reached an end of the cutting arc.

This means that the robotic lawn mower will continue moving at an angle to the original angle of approach, away from the boundary. This in turn enables the robotic lawn mower to repeat the above procedure, performing arcuate movements, such that a continuous grass edge close to the boundary is cut. This can be performed in combination with cutting the rest of the grass on the lawn.

According to some aspects, the robotic lawn mower further comprises a first arcuate protective wall that at least partly runs along the second end portion, and at least one further arcuate protective wall. The protective walls extend from the body towards the ground during normal running, the protective walls being radially separated.

In view of the cutting disc's position, the protective walls confer an injury protection for humans and animals that come close to the second end portion during normal running.

According to some aspects, the protective walls at least mainly follow respective protective wall arcs, where all protective wall arcs have a common center. According to some aspects, the common center is the center of the drive wheel axis.

In this way, when the arcuate movement is performed, the grass will not be bent when moving between the protective walls.

According to some aspects, an arcuate extension of at least one protective wall, at least mainly following a respective protective wall arc, comprises tapered end portions.

This enables the grass to be easily divided between the protective walls when the arcuate movement is performed.

According to some aspects, the second electric motor arrangement is positioned closer to the drive wheel axis than the rotation axis. In this way, the weight of the second electric motor arrangement is positioned closer to the drive wheels which will confer an enhanced traction.

According to some aspects, the robotic lawn mower is adapted for a forward travelling direction and a reverse travelling direction, where the first end portion is facing the forward travelling direction and the second end portion is facing the reverse travelling direction.

In this way, when the protective walls are positioned at the second end portion, this enables relatively high grass to enter between the robotic lawn mower and the ground without being bent, or only being slightly bent, before reaching the cutting disc. This is advantageous since this provides a more efficient cut of the grass, and is enabled by having the cutting disc positioned relatively close to the second end portion.

According to some aspects, the robotic lawn mower comprises a cutting disc arrangement, where the cutting disc arrangement comprises a cover part that in turn comprises cutting apertures. The cover part is positioned between the cutting disc and the ground during normal running and at least mainly covers the side of the cutting disc that faces the ground during normal running.

This provides enhanced protection from the cutting knives.

According to some aspects, the cutting disc arrangement is displaceable such that a distance between the cutting disc and the ground can be adjusted.

This provides enhanced control of grass cutting height.

According to some aspects, the front part comprises housing walls that at least partly encompass the cutting disc.

This provides enhanced protection from the cutting knives.

According to some aspects, the cutting disc arrangement also comprises one or more protective walls that at least partly run along the second end portion, where the protective walls extend from the body towards the ground during normal running and are radially separated.

This provides enhanced protection from the cutting knives.

According to some aspects, one or more protective walls are divided into two parts that are separated by the cutting disc and its cover part.

In this manner, the protective walls are integrated with the cutting disc arrangement.

According to some aspects, the control unit is adapted to control the second electric motor arrangement to rotate the cutting disc in a first rotation direction and a second rotation direction, opposite the first rotation direction. The control unit is further adapted to control the second electric motor arrangement to rotate the cutting disc in that rotation direction which co-indices with a present mowing direction to the largest extent where the cutting disc is closest to the second end portion.

This provides enhanced cutting result and less clogging.

The present disclosure also relates to methods that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a top view of a robotic lawn mower;
- Figure 2: shows a bottom view of the robotic lawn mower;
- Figure 3: shows a side perspective bottom view of the robotic lawn mower;
- Figure 4: shows a side perspective bottom view of an enlarged part the robotic lawn mower;
- Figure 5: shows a side view of the robotic lawn mower;
- Figure 6: shows a schematic view of a movement pattern of the robotic lawn mower;
- Figure 7: shows a schematic view of a control unit;
- Figure 8: shows a computer program product;
- Figure 9: shows a flowchart for methods according to the present disclosure;
- Figure 10: shows a perspective bottom view of a front part of a robotic lawn mower with a cutting disc arrangement in a first position; and
- Figure 11: shows a perspective bottom view of a front part of a robotic lawn mower with a cutting disc arrangement in a second position.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

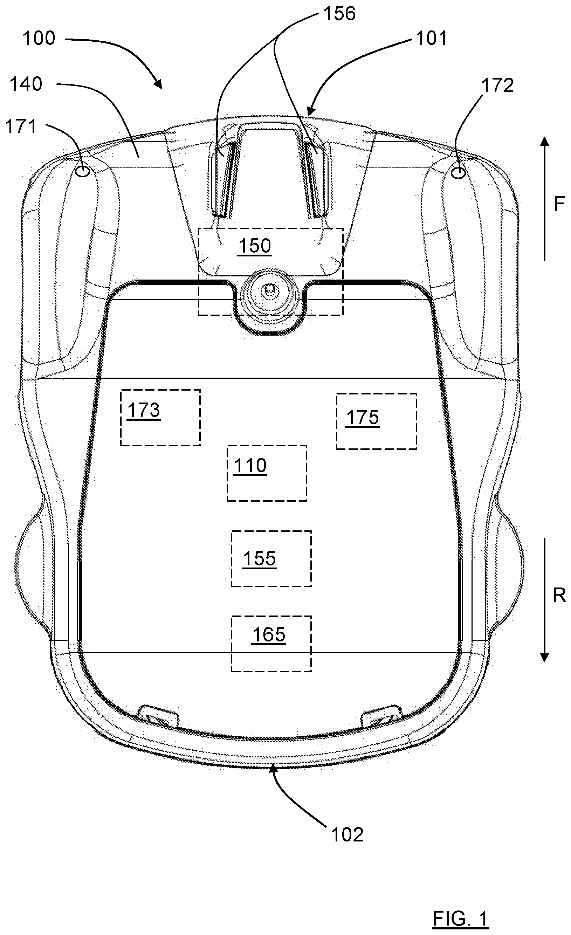

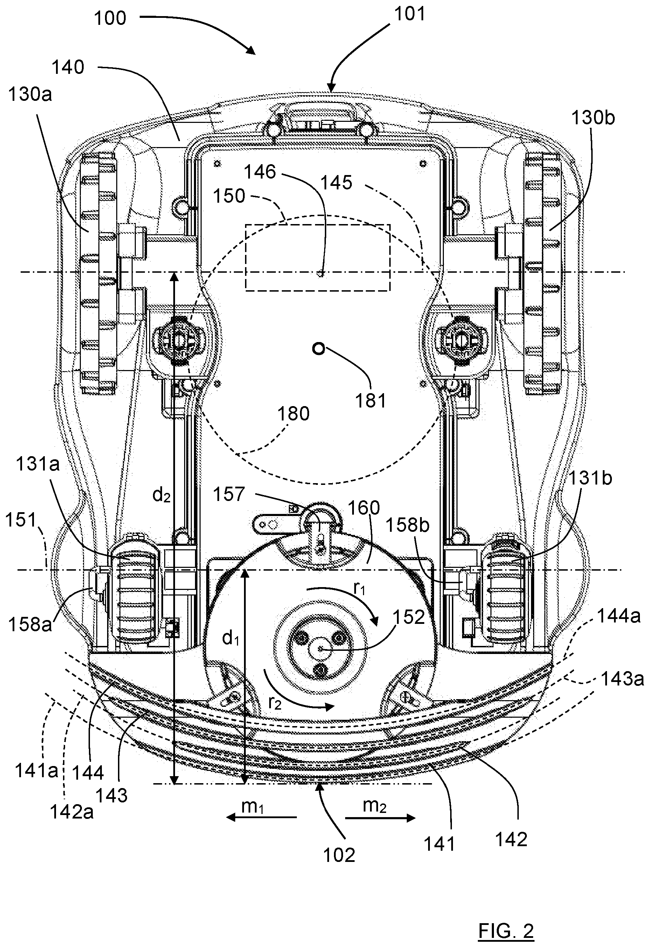

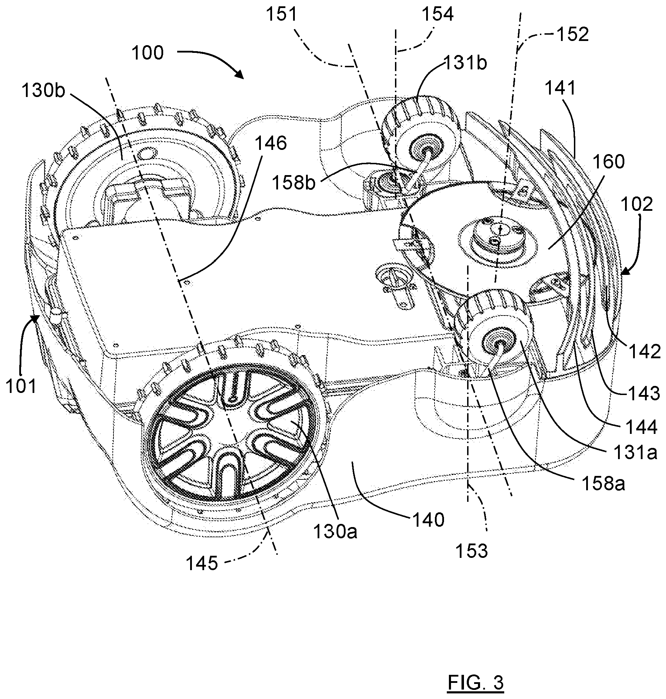

Figure 1 shows a top view of a robotic lawn mower 100, Figure 2 shows a bottom view of the robotic lawn mower 100, and Figure 3 shows a side perspective bottom view of the robotic lawn mower. The robotic lawn mower 100 has a first end portion 101 and a second end portion 102, is adapted for a forward travelling direction F and a reverse travelling direction R. According to some aspects, the first end portion 101 is facing the forward travelling direction F and the second end portion 102 is facing the reverse travelling direction R. The robotic lawn mower 100 comprises a body 140, at least two drive wheels 130a, 130b, at least one swivelable wheel 131a, 131b, a control unit 110 adapted to control the operation of the robotic lawn mower 100, a rotatable grass cutting disc 160 having a rotation axis 152, and at least two electric motor arrangements 150, 165 (only schematically indicated in Figure 2). At least one swivelable wheel has a corresponding swivel axis 153, 154

According to some aspects, as illustrated in this example, the robotic lawn mower 100 comprises four wheels, two larger drive wheels 130a, 130b and two smaller swivelable wheels 131a, 131b that are in form of castor wheels and are arranged to swivel around a corresponding swivel axis 153, 154 when the robotic lawn mower 100 is turning. For this purpose, the swivelable wheels 131a, 131b are connected to the body 140 by means of corresponding swivel wheel holders 158a, 158b, where, according to some aspects, it is the swivel wheel holders 158a, 158b that swivel in relation to the body and are fixed in relation to the swivelable wheels 131a, 131b. The opposite is of course conceivable.

The robotic lawn mower 100 may be a multi-chassis type or a mono-chassis type. A multi-chassis type comprises more than one body parts that are movable with respect to one another. A mono-chassis type comprises only one main body part. **In** this example embodiment, the robotic lawn mower 100 is of a mono-chassis type, having a main body part 140. The main body part 140 substantially houses all components of the robotic lawn mower 100.

The robotic lawn mower 100 also comprises at least one rechargeable electric power source such as a battery 155 (only schematically indicated in Figure 1) for providing power to the electric motor arrangements 150, 165. The battery 155 is arranged to be charged by means of received charging current from a charging station, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

According to some aspects, the robotic lawn mower 100 may further comprise at least one navigation sensor arrangement 175 and/or at least one wire sensor 173 (only schematically indicated in Figure 1). In one embodiment, the navigation sensor arrangement 175 comprises one or more sensors for deduced navigation. Examples of sensors for deduced reckoning are odometers, accelerometers, gyroscopes, and compasses to mention a few examples. The navigation sensor arrangement 175 may comprise a satellite navigation sensor such as a GPS (Global Positioning System) device or other Global Navigation Satellite System (GNSS) device, according to some aspects for example using Real Time Kinematic (RTK).

The wire sensor 173 is adapted to sense a boundary wire control signal and/or at least one environment detection device 170, 171 adapted to detect objects. In this example, radar transceivers 170, 171 are provided and adapted to transmit signals and to receive reflected signals that have been reflected by an object. Other environment detection devices such as camera devices, ultrasonic devices and Lidar devices are of curse also conceivable, as alternatives or in any suitable combination.

The control unit 110 is adapted to control the environment detection device 170, 171 and to control the speed and direction of the robotic lawn mower 100 in dependence of information acquired by means of the of the environment detection devices 170, 171 and/or said wire sensor 173 when the robotic lawn mower 100 is moving.

The drive wheels 130a, 130b have a drive wheel axis 145 with a center 146 and are drivably connected to a first electric motor arrangement 150. A swivel attachment axis 151, running through at least one swivel axis 153, 154 and being parallel to the drive wheel axis 145, is positioned between the second end portion 102 and the drive wheel axis 145. This means that a largest first axis distance d₁ between the swivel attachment axis 151 and the second end portion 102 falls below a largest second axis distance d₂ between the drive wheel axis 145 and the second end portion 102.

According to some aspects, at least two drive wheels 130a, 130b form a pair of drive wheels having the drive wheel axis 145 with the center 146, the center being positioned between the drive wheels 130a, 130b in the pair.

The first electric motor arrangement 150 is adapted to drive the drive wheels 130a, 130b in the same rotation direction, or in different rotation directions, and at different rotational speeds. According to some aspects, the first electric motor arrangement 150 comprises two separate electrical motors, and according to some further aspects each such electric motor is mounted to a corresponding drive wheel 130a, 130b, for example in a corresponding drive wheel hub.

The cutting disc 160 is drivably connected to a second electric motor arrangement 165 that in this example is in the form of a cutter motor. According to some aspects, the cutting disc 160 comprises a plurality of cutting knives 157, in this example three cutting knives 157 are shown (only one indicated in Figure 2).

According to the present disclosure, the cutting disc 160 is at least partly positioned between the swivel attachment axis 151 and the second end portion 102. This means that at least some part of the cutting disc 160 is positioned closer to the second end portion 102 than any part of the swivel attachment axis 151.

**In** this way, the cutting disc 160 is positioned such that it can move laterally in an arcuate manner when the drive wheels 130a, 130b are driven in different rotation directions by the first electric motor arrangement 150.

According to some aspects, the rotation axis 152 is positioned between the swivel attachment axis 151 and the second end portion 102 when the rotation axis 152 passes through the cutting disc 160. **In** this manner, the cutting disc 160 can easily follow the movement of the second end portion 102, in particular when the drive wheels 130a, 130b are driven in different rotation directions by the first electric motor arrangement 150.

An example where the advantages of the placement of the rotation axis 152 of the cutting disc 160 will be described in the following.

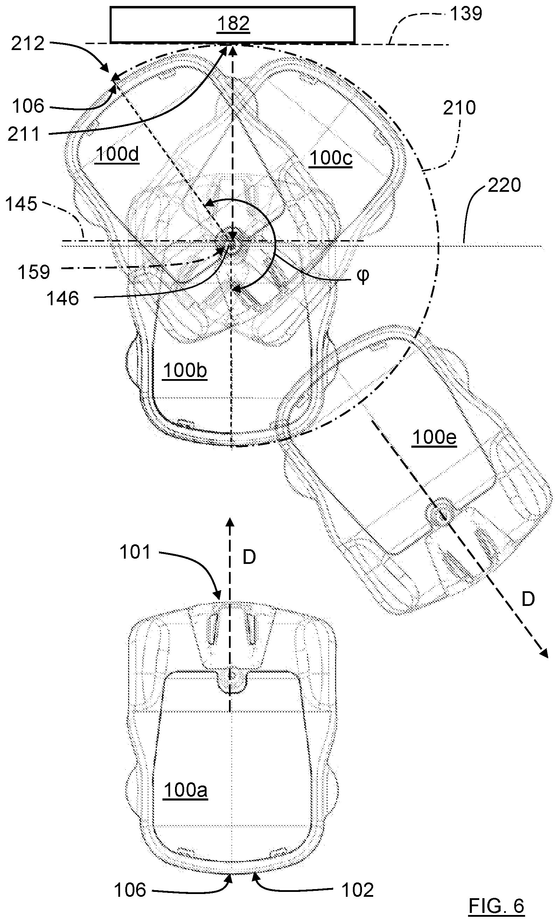

According to some aspects, with reference to Figure 6, the control unit 110 is adapted to control the robotic lawn mower 100a to move towards a boundary 182, 220 in a forward travelling direction F of the robotic lawn mower 100 such that the first end portion 101 approaches the boundary 182, 220, and to determine if a distance to the boundary 182, 220 fulfills a condition. When the condition is fulfilled, the control unit 110 is adapted to stop the robotic lawn mower 100b, and to control the drive wheels 130a, 130b to turn in mutually different directions such that the second end portion 102 of the robotic lawn mower 100c, 100d performs an arcuate movement along a cutting arc 210, enabling the cutting disc 160 to cut grass within the cutting arc 210. Figure 6 thus illustrates the robotic lawn mower 100a, 100b, 100c, 100d, 100e in a plurality of different positions taken at different times.

In this way, cutting the grass relatively close to the boundary is enabled.

According to some aspects, the boundary is in the form of a boundary wire 220 defining an operation area for the robotic lawn mower 100, where the control unit 110 is adapted to stop the robotic lawn mower 100b when the robotic lawn mower 100 is positioned on the boundary wire 220. The robotic lawn mower 100b is then positioned a certain distance away from a lawn edge 139, the boundary wire 220 being positioned a certain distance away from a lawn edge 139. This distance is adapted such that the grass is cut until the lawn edge 139 when the robotic lawn mower 100c, 100d performs the arcuate movement, the cutting arc 210 having a closest arc portion 211 that is closest to the lawn edge 139. In this example, the condition relates to a determined distance between the boundary wire 220 and the robotic lawn mower 100 falling below a first threshold. This means that some predetermined reference point of the robotic lawn mower 100 falls below the second threshold, for example the wire sensor 173.

According to some aspects, the boundary is in the form of an object 182, the robotic lawn mower 100b is then positioned a certain distance away from the object 182, the distance being adapted such that the grass is cut until the object 182 when the robotic lawn mower 100c, 100d performs the arcuate movement, the cutting arc 210 having a closest arc portion 211 that is closest to the object 182. In this example, the condition relates to a determined distance between the object 182 and the robotic lawn mower 100 falling below a second threshold. This means that some predetermined reference point of the robotic lawn mower 100 falls below the second threshold, for example at least one environment detection device 170, 171.

According to some aspects, the condition relates to the robotic lawn mower 100 coming into contact with the object 182, which for example can be detected by a collision sensor and/or a radar transceiver 170 and/or a camera device.

It is to be understood that Figure 6 illustrates both the case where the boundary is in the form of a boundary wire 220, and the case where the boundary is in the form of an object 182. The boundary can thus be in many forms and still allow a relatively close cutting of the grass by means of robotic lawn mower 100 performing the arcuate movement according to the above.

According to some aspects, the object can be in the form of the lawn edge 139. According to some aspects, the object can be detected by any one of the environment detection device 170, 171 and/or the navigation sensor arrangement 175 that may comprise a satellite navigation sensor, alone or in any suitable combination. This means that for example a lawn edge 139 can be detected both by means of a wire sensor 173, an environment detection device 170, 171 and/or a navigation sensor arrangement 175, alone or in combination.

According to some aspects, a center 159 of the cutting arc 210 is positioned along the drive wheel axis 145. According to some further aspects, the center 159 of the cutting arc 210 is positioned in the center 146 of the drive wheel axis 145. This is the case when the drive wheels 130a, 130b are driven in different rotation directions and at the same rotation velocities by the first electric motor arrangement 150. Of course, this should not be interpreted literally, since small deviations can occur due to motor inaccuracies, uneven ground, uneven ground contact and uneven ground friction. The velocities being the same and the center 159 of the cutting arc 210 being positioned in the center 146 of the drive wheel axis 145 should be interpreted according to what is intended and practically achievable, not to be mathematically exact.

According to some aspects, the cutting arc 210 has an angular extension φ that exceeds 180°, where the control unit 110 is adapted to control the robotic lawn mower 100e to continue moving forward when a second end center 106, according to some aspects constituting a rearmost point, that has followed the extension of the cutting arc 210 has reached an end 212 of the cutting arc 210. This means that the robotic lawn mower 100e will continue moving at an angle to the original angle of approach, away from the boundary 182, 220. This in turn enables the robotic lawn mower 100 to repeat the above procedure, performing arcuate movements, such that a continuous grass edge close to the boundary 182, 220 is cut. This can be performed in combination with cutting the rest of the grass on the lawn.

According to some aspects, the lawn mower 100 can be adapted to be set in a mode where only a continuous grass edge close to the boundary 182, 220 is cut, the rest of the lawn not being cut during that time. This mode could be selected by a user.

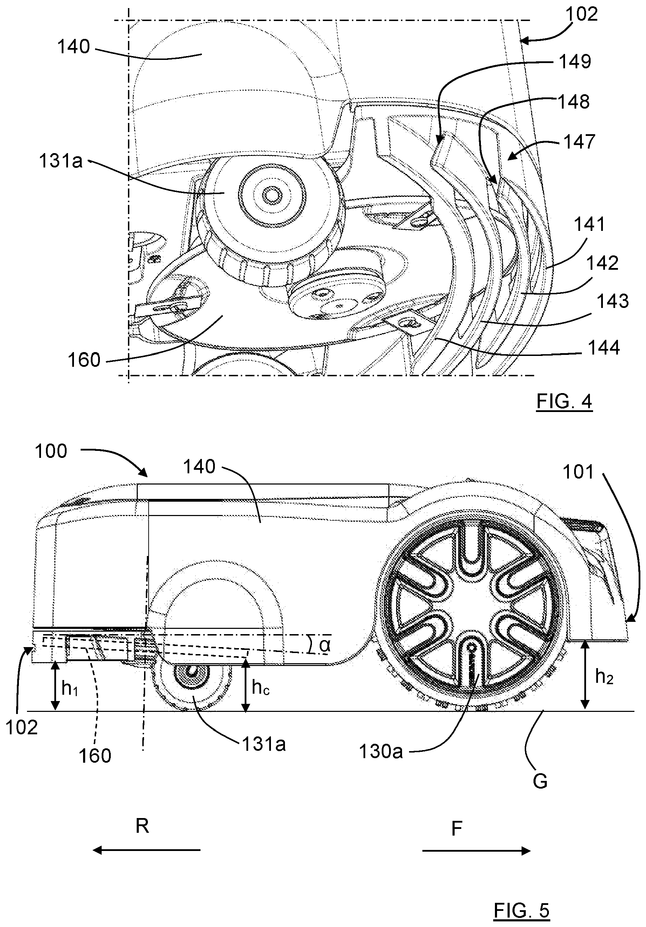

According to some aspects, also with reference to Figure 4 and Figure 5, the robotic lawn mower 100 further comprises a first arcuate protective wall 141 that at least partly runs along the second end portion 102, and at least one further arcuate protective wall 142, 143, 144, the protective walls 141, 142, 143, 144 extending from the body 140 towards the ground G during normal running, the protective walls 141, 142, 143, 144 being radially separated.

In this examples, there are four protective walls 141, 142, 143, 144; the first protective wall 141, a second protective wall 142, a third protective walls 14, and a fourth protective wall 144. Since the cutting disc 160 is at least partly positioned between the swivel attachment axis 151 and the second end portion 102, and, according to some aspects, the rotation axis 152 is positioned between the swivel attachment axis 151 and the second end portion 102 when the rotation axis 152 passes through the cutting disc 160, the protective walls 141, 142, 143, 144 confer an injury protection for humans and animals that come close to the second end portion 102 during normal running.

There is a first distance h₁ between the first protective wall 141 and the ground G, where the first distance h₁ of course varies slightly during running. There is a second distance h₂ between the first end portion 101 and the ground G, where the second distance h₂ of course also varies slightly during running. In this example, the first distance h₁ falls below the second distance h₂, and in the case of the first end portion 101 is facing the forward travelling direction F, this means that relatively high grass can enter between the robotic lawn mower 100 and the ground G without being bent, or only being slightly bent, before reaching the cutting disc 160. A spring-back effect for bent grass can need an additional distance and thus also an additional time to bend back.

This is advantageous since this provides a more efficient cut of the grass, and is enabled by having the cutting disc 160 positioned relatively close to the second end portion 102 where the cutting disc 160 is protected by means of the protective walls 141, 142, 143, 144.

According to some aspects, the protective walls 141, 142, 143, 144 are partly positioned between the cutting disc 160 and the ground G during normal running. In this manner, the cutting disc 160 can reach the second end portion 102 while humans and animals that come close to the second end portion 102 during normal running still are protected from injury.

According to some aspects, the protective walls 141, 142, 143, 144 at least mainly follow respective protective wall arcs 141a, 142a, 143a, 144a, where all protective wall arcs 141a, 142a, 143a, 144a have a common center 146. According to some aspects, the common center 146 is the center of the drive wheel axis 145. In this way, when the arcuate movement is performed, the grass will not be bent when moving between the protective walls 141, 142, 143, 144. According to some aspects, the radial separation of the protective walls 141, 142, 143, 144 relates to the common center.

According to some aspects, an arcuate extension of at least one protective wall 141, 142, 143, at least mainly following a respective protective wall arc 141a, 142a, 143a, 144a, comprises tapered end portions 147, 148, 149. This means that the arcuate ends of at least one protective wall 141, 142, 143, there are tapered end portions 147, 148, 149. In this example, this is the case for the first three protective walls 141, 142, 143, and enables the grass to be easily divided between the protective walls 141, 142, 143, 144 when the arcuate movement is performed.

It is to be noted that, according to some aspects, the rotation axis 152 can be tilted with a cutting disc angle of incidence, constituting an angle of approach α, towards the ground G. Such a tilt improves the cutting result, the cutting disc 160 being closer to the ground G where the cutting disc 160 faces the forward travelling direction F. In the case where the first end portion 101 is facing the forward travelling direction F and the second end portion 102 is facing the reverse travelling direction R, there is an advantage since the first distance h₁ between the first protective wall 141 and the ground G can be increased.

It is to be noted that all position references to the rotation axis 152 are intended to be considered when the rotation axis 152 passes through the cutting disc 160

According to some aspects, the second electric motor arrangement 165 is positioned closer to the drive wheel axis 145 than to the rotation axis 152. In this way, the weight of the cutter motor 165 is positioned closer to the drive wheels 130a, 130b which will confer an enhanced traction. Some power transfer means is needed in this case for transferring rotational power from the cutter motor 165 to the cutting disc 160. Such power transfer means can for example be in the form of a drive belt, a drive chain or a geared transmission.

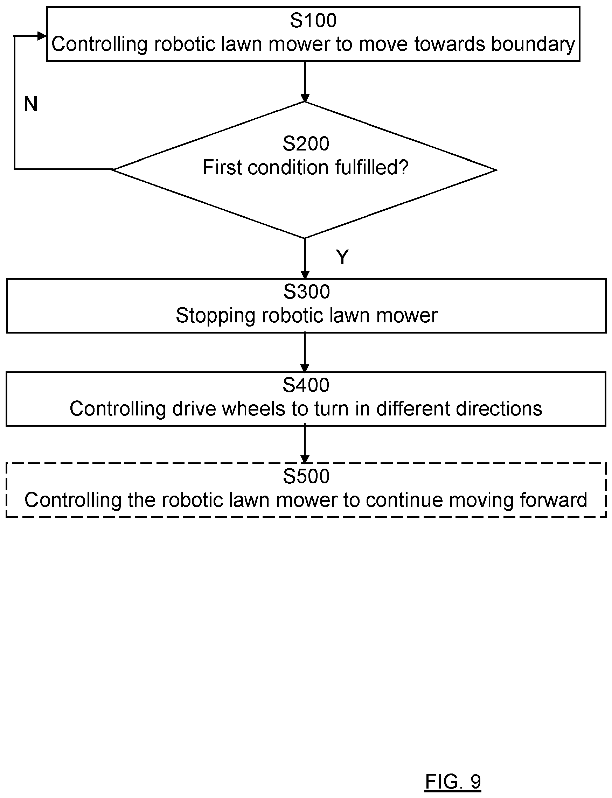

With reference to Figure 9, the present disclosure also relates to a method for controlling a robotic lawn mower 100 having a first end portion 101, a second end portion 102, at least two drive wheels 130a, 130b having a drive wheel axis 145 with a center 146 and are drivably connected to a first electric motor arrangement 150, and at least one swivelable wheel 131a, 131b that has a corresponding swivel axis 153,154. A swivel attachment axis 151, running through at least one swivel axis 153,154 and being parallel to the drive wheel axis 145, is positioned between the second end portion 102 and the drive wheel axis 145. The robotic lawn mower 100 further has a rotatable grass cutting disc 160 that at least partly is positioned between the swivel attachment axis 151 and the second end portion 102.

The method comprises controlling S100 the robotic lawn mower 100a to move towards a boundary 182, 220 such that the first end portion 101 approaches the boundary 182, 220 and determining S200 if a distance to a boundary 182, 220 fulfills a condition. When that is the case, the method comprises stopping S300 the robotic lawn mower 100b, and controlling S400 the drive wheels 130a, 130b to turn in mutually different directions such that the second end portion 102 of the robotic lawn mower 100c, 100d performs an arcuate movement along a cutting arc 210, enabling the cutting disc 160 to cut grass within the cutting arc 210.

According to some aspects, the rotation axis 152 is positioned between the swivel attachment axis 151 and the second end portion 102 when the rotation axis 152 passes through the cutting disc 160.

According to some aspects, the cutting arc 210 has an angular extension that exceeds 180°, where the method comprises controlling S500 the robotic lawn mower 100e to continue moving after a second end portion center 106 following the extension of the cutting arc 210 has reached an end 212 of the cutting arc 210.

According to some aspects, the boundary is in the form of a boundary wire 220 defining an operation area for the robotic lawn mower 100, where stopping S300 of the robotic lawn mower 100 takes place when the robotic lawn mower 100 is positioned on the boundary wire 220, where the condition relates to a determined distance between the boundary wire 220 and the robotic lawn mower 100 falling below a first threshold.

According to some aspects, the boundary is in the form of an object 182, where the cutting arc has a closest arc portion 211 that is closest to the object 182, where the condition relates to a determined distance between the object 182 and the robotic lawn mower 100 falling below a second threshold.

According to some aspects, the condition relates to the robotic lawn mower 100 coming into contact with the object 182, which for example can be detected by a collision sensor and/or a radar transceiver 170 and/or a camera device.

According to some aspects, the cutting arc 210 has an angular extension that exceeds 180°, where the control unit 110 is adapted to control the robotic lawn mower 100e to continue moving when a second end center 106 that has followed the extension of the cutting arc 210 has reached an end 212 of the cutting arc 210.

According to some aspects, the method comprises using at least one wire sensor 173 to sense a boundary wire control signal and/or using at least one environment detection device 170, 171 to detect objects 182.

According to some aspects, the robotic lawn mower 100 is used for a forward travelling direction F and a reverse travelling direction R, where the first end portion 101 is facing the forward travelling direction F and the second end portion 102 is facing the reverse travelling direction R.

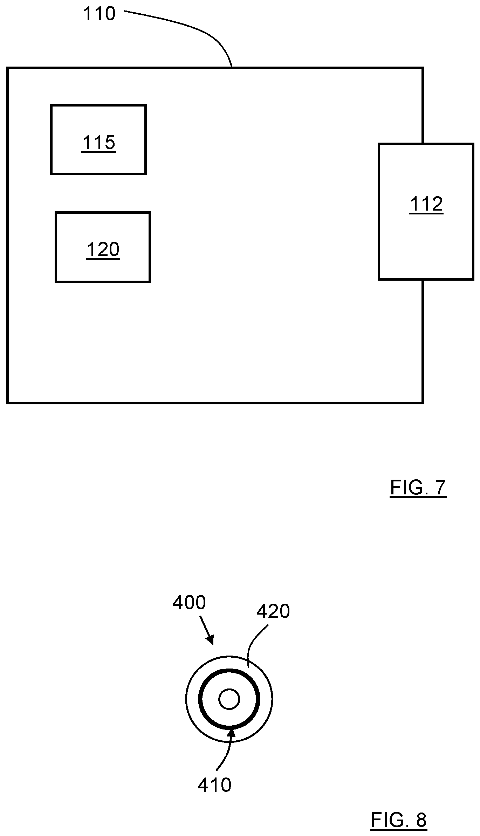

In Figure 7 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the radar transceivers 170, processing measurements results received via the radar transceivers 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 112 for communications with at least one external device such as a user terminal. As such the interface 112 may comprise one or more transmitters and receivers, comprising analogue and digital components and a suitable number of ports for wireline communication. The interface 112 can be adapted for communication with other devices, such as a remote server, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server are adapted to partly execute the methods as herein disclosed.

Figure 8 shows a computer program product 400 comprising computer executable instructions 410 stored on media 420 to execute any of the methods disclosed herein.

The present disclosure is not limited to the above, but may vary freely within the scope of the appended claims. For example, the first end portion 101 can be facing the reverse travelling direction R and the second end portion 102 can be facing the forward travelling direction F.

The end portions 101, 102 are shown as arcuate portions facing a forward travelling direction F or rearward travelling direction R where, according to some aspects, the first arcuate protective wall 141 constitutes the second end portion 102. According to some aspects, an end portion 101, 102 can be defined as a rearmost of foremost point at the robotic lawn mower 100. According to some aspects, the first end portion 101 is opposite the second end portion 102, each end portion facing a travelling direction.

According to some aspects, the swivel attachment axis 151 runs via the points where the swivelable wheels 131a, 131b are connected to the body 140 by means of corresponding swivel wheel holders 158a, 158b.

According to some aspects, the robotic lawn mower 100 comprises at least one protective wall that at least partly runs along, or adjacent, the second end portion 102, and extends from the body 140 towards the ground G during normal running. That protective wall can be straight and/or arcuate, or have any other suitable shape. **In** this context, adjacent means close to the second end portion 102 such that the protective wall offers protection form the cutting knives 157 of the cutting disc 160 when the cutting disc 160 is approached towards the second end portion 102.

Since the cutting disc 160 is at least partly positioned between the swivel attachment axis 151 and the second end portion 102, and, according to some aspects, the rotation axis 152 is positioned between the swivel attachment axis 151 and the second end portion 102 when the rotation axis 152 passes through the cutting disc 160, the at least one protective wall confers an injury protection for humans and animals that come close to the second end portion 102 during normal running. This means that, in this example, there need only be one protective wall that can have any suitable shape, not needing to be arcuate.

In particular in the case of having two or more protective walls 141, 142, 143, 144, it is desired to avoid clogging of the protective walls 141, 142, 143, 144 and to enhance cutting quality. When a robotic lawn mower 110 is running, there is a difference in cutting performance if the cutting disc 160 is rotating in a mowing direction, or against a mowing direction. Therefore, according to some aspects and with reference to Figure 2, the control unit 110 is adapted to control the second electric motor arrangement 165 to rotate the cutting disc 160 in a first rotation direction r₁ and a second rotation direction r₂, opposite the first rotation direction r₁. In particular, the control unit 110 is adapted to control the second electric motor arrangement 165 to rotate the cutting disc 160 in a rotation direction r₁, r₂ in dependence of a mowing direction. Generally, the control unit 110 is adapted to control the second electric motor arrangement 165 to rotate the cutting disc 160 in that rotation direction r₁, r₂ which co-indices with a present mowing direction m₁, m₂ to the largest extent where the cutting disc 160 is closest to the second end portion 102. Here, a mowing direction m₁, m₂ is the direction in which the second end portion 102 is moving during mowing, but other parts can also be used as reference for the mowing direction m₁, m₂.

In the present example, when looking at the bottom side of the robotic lawn mower 100, the first rotation direction r₁ corresponds to a first mowing direction m₁ and the second rotation direction r₂ corresponds to a second mowing direction m₂, different from the first mowing direction m₁ and for example opposite the first mowing direction m₁. Here, the first rotation direction r₁ is clock-wise and the second rotation direction r₂ is counter clock-wise, and first mowing direction m₁ is directed leftward and the second mowing direction m₂ is directed rightward. When seen from the top of the robotic lawn mower 100, the first mowing direction m₁ corresponds to the robotic lawn mower 100 turning left, and the second mowing direction m₂ corresponds to the robotic lawn mower 100 turning right. According to some aspects, when the robotic lawn mower 100 performs an arcuate movement along a cutting arc 210 as described previously, that arcuate movement is directed in the mowing direction.

When the robotic lawn mower 100 moves in the first mowing direction m₁, the cutting disc 160 is controlled to rotate in the first rotation direction r₁, and when the robotic lawn mower 100 moves in the second mowing direction m₂, the cutting disc 160 is controlled to rotate in the second rotation direction r₂.

This means that the cutting knives 157 always will cut against the grass direction since the grass will be brought towards the cutting knives 157 against the movement of the cutting knives 157 due to the present mowing direction. This will also result in that grass is thrown away from the protective walls 141, 142, 143, 144, the grass meeting the cutting knives 157 as soon as possible. As a result of this, an enhanced cutting result and less clogging is obtained.

According to some aspects and with reference to Figure 2, there is a further cutting disc 180 (only schematically indicated) having a rotational axle 181 positioned between the swivel attachment axis 151 and the drive wheel axis 145. This further cutting disc 180 can constitute a main cutting disc 180 that is operative during normal cutting, the cutting disc 160 possibly being disengaged. When the robotic lawn mower 100 is controlled to cut grass relatively close to a boundary, for example by performing the previously described arcuate movement along a cutting arc, the main cutting disc 180 may be disengaged and the cutting disc 160 is engaged into operation.

According to some aspects, the main cutting disc 180 has a larger diameter, and thus cutting width, than the cutting disc 160. By only using the cutting disc 160 when cutting grass relatively close to a boundary and using the main cutting disc 180 otherwise, energy may be saved and efficiency increased. According to some aspects, the main cutting disc 180 is adjustable with respect to grass cutting height, manually or automatically in previous known manners. This means that the main cutting disc 180 is displaceable such that a distance between the main cutting disc 180 and the ground G can be adjusted,

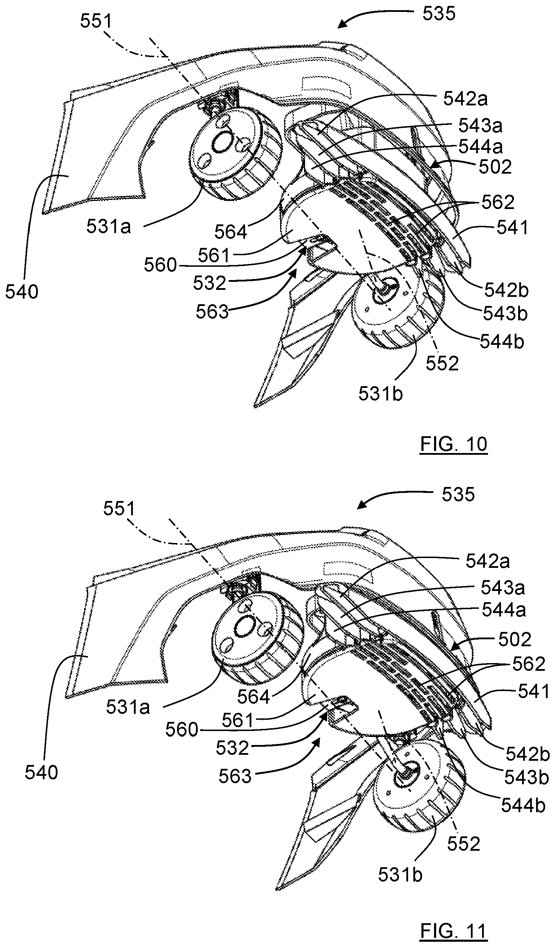

According to some aspects, with reference to Figure 10 and Figure 11 that show a perspective bottom view of a front part 535 of a robotic lawn mower, the robotic lawn mower comprises a cutting disc arrangement 563. The cutting disc arrangement 563 comprises a rotatable grass cutting disc 560 that at least partly is positioned between a swivel attachment axis 551 and a second end portion 502. Alternatively, a rotation axis 552 of the cutting disc 560 is positioned between the swivel attachment axis 551 and the second end portion 502 when the rotation axis 552 passes through the cutting disc 560. This positioning corresponds to the rotatable grass cutting disc 160 according to the previous examples disclosed above.

**In** this example, the cutting disc arrangement 563 comprises a cover part 561 that in turn comprises cutting apertures 562 (only a few indicated for reasons of clarity). The cover part 561 is positioned between the cutting disc 560 and the ground G (as shown in Figure 5) during normal running and at least mainly covering the side of the cutting disc 560 that faces the ground G during normal running. According to some aspects, the cover part 560 comprises an opening 532 that provides access to the cutting disc 560, which for example is suitable when changing or sharpening cutting knives.

This provides enhanced protection from the cutting knives.

According to some aspects, the cutting disc arrangement 563 is displaceable such that a distance between the cutting disc 560 and the ground G can be adjusted, in Figure 5 a smallest distance h_{c} between the cutting disc 560 and the ground G is indicated. This can be accomplished in many ways, for example the cutting disc arrangement 563 can be slidably arranged in tracks and lockable in a suitable position by means of one or more screws (not shown). This is illustrated in Figure 10 and Figure 11, where Figure 10 shows the cutting disc arrangement 563 in a first position and Figure 11 shows the cutting disc arrangement 563 in a second position. In the first position, the distance h_{c} between the cutting disc 560 and the ground G is smaller than in the second position.

This provides enhanced control of grass cutting height in an uncomplicated manner.

According to some aspects, the front part 535 comprises housing walls 564 that at least partly encompass the cutting disc 560. The housing walls 564 can for example be comprised in the cutting disc arrangement 563.

According to some further aspects, the cutting disc arrangement 563 also comprises one or more protective walls 541; 542a, 542b, 543a, 543b, 544a, 544b that at least partly run along the second end portion 502. The protective walls 541; 542a, 542b, 543a, 543b, 544a, 544b extend from a lawn mower body 540 towards the ground G during normal running and are radially separated, similar to the protective walls according to the previous examples disclosed above.

According to some aspects, one or more protective walls are divided into two parts 542a, 542b, 543a, 543b, 544a, 544b that are separated by the cutting disc 560 and its cover part 561. The protective walls 541; 542a, 542b, 543a, 543b, 544a, 544b may be separate from the cutting disc arrangement 563. Alternatively, according to some aspects, at least one or more protective walls 541; 542a, 542b, 543a, 543b, 544a, 544b are comprised in the cutting disc arrangement 563.

In the latter case, as illustrated in Figure 10 and Figure 11, all protective walls 541; 542a, 542b, 543a, 543b, 544a, 544b are comprised in the cutting disc arrangement 563. This means that when the cutting disc arrangement 563 is displaced such that a distance between the cutting disc 560 and the ground G is adjusted, the at least one or more protective walls 541; 542a, 542b, 543a, 543b, 544a, 544b which are comprised in the cutting disc arrangement 563 are also displaced in a corresponding manner as shown in Figure 10 and Figure 11.

Furthermore, according to some aspects, there is a first protective wall 541 that is not separated, being closest to the second end portion 502. There are three further protective walls 542a, 542b; 543a, 543b; 544a, 544b that are separated by the cutting disc 560 and its cover part 561, forming six protective sub-walls 542a, 542b, 543a, 543b, 544a, 544b. In this manner, the protective walls are integrated with the cutting disc arrangement.

According to some aspects, one or more protective walls 542a, 542b, 543a, 543b, 544a, 544b at least mainly follow respective protective wall arcs as described for the previous examples disclosed above.

According to some aspects, the cutting disc 160, 560 itself is displaceable such that a distance between the cutting disc 160, 560 and the ground G can be adjusted while the protective walls remain fixed relative the body 140. In this case, the body 140 can provide a sufficient protective coverage that the cover part 561 is less needed.

Alternatively, when the protective walls are integrated with the cutting disc arrangement and the protective walls 541; 542a, 542b, 543a, 543b, 544a, 544b follow the cutting disc 560 when displaced, a larger ground clearance is provided which is advantageous in the case of an uneven lawn being cut. In this case, the cover part 561 can be more needed since the body 140 has to be adapted to maximum ground clearance, thus providing less protective coverage.

It is to be noted, however, that the cover part 561 always is an optional part that can be added when required for providing an increased protection from the cutting knives.

In other words, there may be only the cutting disc 160 or alternatively also a main cutting disc 180. At least one cutting disc is displaceable such that a distance between the cutting disc 160, 560 and the ground G can be adjusted, manually or automatically. The protective wall or protective walls may be fixed with respect to the body, or be adapted to follow the cutting disc 160 when adjusted.

## Claims

1. A robotic lawn mower (100) having a first end portion (101) and a second end portion (102) and being adapted for a forward travelling direction (F) and a reverse travelling direction (R) where the first end portion (101) is facing the forward travelling direction (F) and the second end portion (102) is facing the reverse travelling direction (R), the robotic lawn mower (100) comprising a body (140), at least two drive wheels (130a, 130b), at least one swivelable wheel (131a, 131b), a control unit (110) adapted to control the operation of the robotic lawn mower (100), a rotatable grass cutting disc (160) having a rotation axis (152), and at least two electric motor arrangements (150, 165), where at least two drive wheels (130a, 130b) have a drive wheel axis (145) with a center (146) and are drivably connected to a first electric motor arrangement (150), where at least one swivelable wheel (131a, 131b) has a corresponding swivel axis (153,154), where a swivel attachment axis (151), running through at least one swivel axis (153,154) and being parallel to the drive wheel axis (145), is positioned between the second end portion (102) and the drive wheel axis (145), and where the cutting disc (160) is drivably connected to a second electric motor arrangement (165), wherein the cutting disc (160) at least partly is positioned between the swivel attachment axis (151) and the second end portion (102) **characterised in that** the robotic lawn mower (100) further comprises a first arcuate protective wall (141) that at least partly runs along the second end portion (102), and at least one further arcuate protective wall (142, 143, 144), the protective walls (141, 142, 143, 144) extending from the body (140) towards the ground (G) during normal running, the protective walls (141, 142, 143, 144) being radially separated.

2. The robotic lawn mower (100) according to claim 1, wherein the rotation axis (152) is positioned between the swivel attachment axis (151) and the second end portion (102) when the rotation axis (152) passes through the cutting disc (160).

3. The robotic lawn mower (100) according to any one of the previous claims, wherein the protective walls (141, 142, 143, 144) partly are positioned between the cutting disc (160) and the ground (G) during normal running.

4. The robotic lawn mower (100) according to any one of the previous claims, wherein the protective walls (141, 142, 143, 144) at least mainly follow respective protective wall arcs (141a, 142a, 143a, 144a), where all protective wall arcs (141a, 142a, 143a, 144a) have a common center (146).

5. The robotic lawn mower (100) according to claim 5, wherein the common center (146) is the center of the drive wheel axis (145).

6. The robotic lawn mower (100) according to any one of the previous claims, wherein an arcuate extension of at least one protective wall (141, 142, 143), at least mainly following a respective protective wall arc (141a, 142a, 143a, 144a), comprises tapered end portions (147, 148, 149).

7. The robotic lawn mower (100) according to any one of the previous claims, wherein the second electric motor arrangement (165) is positioned closer to the drive wheel axis (145) than the rotation axis (152).

8. The robotic lawn mower (100) according to any one of the previous claims, wherein the control unit (110) is adapted to
control the robotic lawn mower (100a) to move towards a boundary (182, 220) such that the first end portion (101) approaches the boundary (182, 220);
determine if a distance to the boundary (182, 220) fulfills a condition; and when that is the case, the control unit (110) is adapted to
stop the robotic lawn mower (100b); and to
control the drive wheels (130a, 130b) to turn in mutually different directions such that the second end portion (102) of the robotic lawn mower (100c, 100d) performs an arcuate movement along a cutting arc (210), enabling the cutting disc (160) to cut grass within the cutting arc (210).

9. The robotic lawn mower (100) according to claim 8, wherein the center of the cutting arc (210) is positioned along the drive wheel axis (145).

10. The robotic lawn mower (100) according to claim 9, wherein the center of the cutting arc (210) is positioned in the center (146) of the drive wheel axis (145).

11. The robotic lawn mower (100) according to any one of the claims 8-10, wherein the boundary is in the form of a boundary wire (220) defining an operation area for the robotic lawn mower (100), where the control unit (110) is adapted to stop the robotic lawn mower (100) when the robotic lawn mower (100) is positioned on the boundary wire (220), where the condition relates to a determined distance between the boundary wire (220) and the robotic lawn mower (100) falling below a first threshold.

12. The robotic lawn mower (100) according to any one of the claims 8-11, wherein the boundary is in the form of an object (182), where the cutting arc has a closest arc portion (211) that is closest to the object (182), where the condition relates to a determined distance between the object (182) and the robotic lawn mower (100) falling below a second threshold.

13. The robotic lawn mower (100) according to any one of the claims 8-10, wherein the condition relates to the robotic lawn mower (100) coming into contact with the object (182).

## Patentansprüche

1. Robotischer Rasenmäher (100) mit einem ersten Endabschnitt (101) und einem zweiten Endabschnitt (102) und angepasst für eine Vorwärtsfahrtrichtung (F) und eine Rückwärtsfahrtrichtung (R), wobei der erste Endabschnitt (101) der Vorwärtsfahrtrichtung (F) zugewandt ist und der zweite Endabschnitt (102) der Rückwärtsfahrtrichtung (R) zugewandt ist, wobei der robotische Rasenmäher (100) einen Körper (140), mindestens zwei Antriebsräder (130a, 130b), mindestens ein schwenkbares Rad (131a, 131b), eine Steuereinheit (110), die angepasst ist, um den Betrieb des robotischen Rasenmähers (100) zu steuern, eine drehbare Grasschneidscheibe (160) mit einer Drehachse (152) und mindestens zwei elektrische Motoranordnungen (150, 165) umfasst, wobei mindestens zwei Antriebsräder (130a, 130b) eine Antriebsradachse (145) mit einem Zentrum (146) aufweisen und antreibbar mit einer ersten elektrischen Motoranordnung (150) verbunden sind, wobei mindestens ein schwenkbares Rad (131a, 131b) eine entsprechende Schwenkachse (153, 154) aufweist, wobei eine Schwenkbefestigungsachse (151), die durch mindestens eine Schwenkachse (153, 154) verläuft und parallel zu der Antriebsradachse (145) ist, zwischen dem zweiten Endabschnitt (102) und der Antriebsradachse (145) positioniert ist, und wobei die Schneidscheibe (160) antreibbar mit einer zweiten elektrischen Motoranordnung (165) verbunden ist, wobei die Schneidscheibe (160) mindestens teilweise zwischen der Schwenkbefestigungsachse (151) und dem zweiten Endabschnitt (102) positioniert ist, **dadurch gekennzeichnet, dass** der robotische Rasenmäher (100) ferner eine erste bogenförmige Schutzwand (141) umfasst, die mindestens teilweise entlang des zweiten Endabschnitts (102) verläuft, und mindestens eine weitere bogenförmige Schutzwand (142, 143, 144), wobei sich die Schutzwände (141, 142, 143, 144) vom Körper (140) zum Boden (G) während des normalen Betriebs erstrecken, wobei die Schutzwände (141, 142, 143, 144) radial getrennt sind.

2. Robotischer Rasenmäher (100) nach Anspruch 1, wobei die Drehachse (152) zwischen der Schwenkbefestigungsachse (151) und dem zweiten Endabschnitt (102) positioniert ist, wenn die Drehachse (152) durch die Schneidscheibe (160) verläuft.

3. Robotischer Rasenmäher (100) nach einem der vorstehenden Ansprüche, wobei die Schutzwände (141, 142, 143, 144) teilweise zwischen der Schneidscheibe (160) und dem Boden (G) während des normalen Betriebs positioniert sind.

4. Robotischer Rasenmäher (100) nach einem der vorstehenden Ansprüche, wobei die Schutzwände (141, 142, 143, 144) mindestens hauptsächlich jeweiligen Schutzwandbögen (141a, 142a, 143a, 144a) folgen, wobei alle Schutzwandbögen (141a, 142a, 143a, 144a) ein gemeinsames Zentrum (146) aufweisen.

5. Robotischer Rasenmäher (100) nach Anspruch 5, wobei das gemeinsame Zentrum (146) das Zentrum der Antriebsradachse (145) ist.

6. Robotischer Rasenmäher (100) nach einem der vorstehenden Ansprüche, wobei eine bogenförmige Erstreckung mindestens einer Schutzwand (141, 142, 143), die mindestens hauptsächlich einem jeweiligen Schutzwandbogen (141a, 142a, 143a, 144a) folgt, sich verjüngende Endabschnitte (147, 148, 149) umfasst.

7. Robotischer Rasenmäher (100) nach einem der vorstehenden Ansprüche, wobei die zweite Elektromotoranordnung (165) näher zu der Antriebsradachse (145) als zu der Drehachse (152) positioniert ist.

8. Robotischer Rasenmäher (100) nach einem der vorstehenden Ansprüche, wobei die Steuereinheit (110) angepasst ist zum
Steuern des robotischen Rasenmähers (100a), dass er sich zu einer Begrenzung (182, 220) bewegt, so dass sich der erste Endabschnitt (101) der Begrenzung (182, 220) nähert;
Bestimmen, ob ein Abstand zu der Begrenzung (182, 220) eine Bedingung erfüllt; und wenn das der Fall ist, die Steuereinheit (110) ausgelegt ist zum
Stoppen des robotischen Rasenmähers (100b); und zum
Steuern der Antriebsräder (130a, 130b), so dass sie sich in voneinander verschiedene Richtungen drehen, so dass der zweite Endabschnitt (102) des robotischen Rasenmähers (100c, 100d) eine bogenförmige Bewegung entlang eines Schneidbogens (210) ausführt, wodurch die Schneidscheibe (160) Gras innerhalb des Schneidbogens (210) schneiden kann.

9. Robotischer Rasenmäher (100) nach Anspruch 8, wobei das Zentrum des Schneidbogens (210) entlang der Antriebsradachse (145) positioniert ist.

10. Robotischer Rasenmäher (100) nach Anspruch 9, wobei das Zentrum des Schneidbogens (210) in dem Zentrum (146) der Antriebsradachse (145) positioniert ist.

11. Robotischer Rasenmäher (100) nach einem der Ansprüche 8 bis 10, wobei die Begrenzung in Form eines Begrenzungskabels (220) vorliegt, der einen Betriebsbereich für den robotischen Rasenmäher (100) definiert, wobei die Steuereinheit (110) ausgelegt ist, um den robotischen Rasenmäher (100) zu stoppen, wenn der robotische Rasenmäher (100) auf dem Begrenzungskabel (220) positioniert ist, wobei sich die Bedingung auf einen bestimmten Abstand zwischen dem Begrenzungskabel (220) und dem robotischen Rasenmäher (100) bezieht, der unter einen ersten Schwellenwert fällt.

12. Robotischer Rasenmäher (100) nach einem der Ansprüche 8 bis 11, wobei die Begrenzung in Form eines Objekts (182) vorliegt, wobei der Schneidbogen einen nächstgelegenen Bogenabschnitt (211) aufweist, der dem Objekt (182) am nächsten ist, wobei sich die Bedingung auf einen bestimmten Abstand zwischen dem Objekt (182) und dem robotischen Rasenmäher (100) bezieht, der unter einen zweiten Schwellenwert fällt.

13. Robotischer Rasenmäher (100) nach einem der Ansprüche 8 bis 10, wobei sich die Bedingung darauf bezieht, dass der robotische Rasenmäher (100) mit dem Objekt (182) in Kontakt kommt.

## Revendications

1. Tondeuse à gazon robotique (100) ayant une première partie d'extrémité (101) et une seconde partie d'extrémité (102) et étant adaptée à une direction de déplacement vers l'avant (F) et une direction de déplacement vers l'arrière (R) où la première partie d'extrémité (101) fait face à la direction de déplacement vers l'avant (F) et la seconde partie d'extrémité (102) fait face à la direction de déplacement vers l'arrière (R), la tondeuse à gazon robotique (100) comprenant un corps (140), au moins deux roues motrices (130a, 130b), au moins une roue pivotante (131a, 131b), une unité de commande (110) configurée pour commander le fonctionnement de la tondeuse à gazon robotique (100), un disque de coupe de gazon (160) rotatif ayant un axe de rotation (152), et au moins deux agencements de moteurs électriques (150, 165), où au moins deux roues motrices (130a, 130b) ont un axe de roue motrice (145) avec un centre (146) et sont reliées de manière entraînable à un premier agencement de moteur électrique (150), où au moins une roue pivotante (131a, 131b) a un axe de pivotement (153, 154) correspondant, où un axe de fixation pivotant (151), traversant au moins un axe de pivotement (153, 154) et étant parallèle à l'axe de roue motrice (145), est positionné entre la seconde partie d'extrémité (102) et l'axe de roue motrice (145), et où le disque de coupe (160) est relié de manière entraînable à un second agencement de moteur électrique (165), dans laquelle le disque de coupe (160) est au moins partiellement positionné entre l'axe de fixation pivotant (151) et la seconde partie d'extrémité (102), **caractérisée en ce que** la tondeuse à gazon robotique (100) comprend en outre une première paroi de protection (141) arquée qui longe au moins partiellement la seconde partie d'extrémité (102), et au moins une autre paroi de protection (142, 143, 144) arquée, les parois de protection (141, 142, 143, 144) s'étendant du corps (140) vers le sol (G) pendant un fonctionnement normal, les parois de protection (141, 142, 143, 144) étant séparées radialement.

2. Tondeuse à gazon robotique (100) selon la revendication 1, dans laquelle l'axe de rotation (152) est positionné entre l'axe de fixation pivotant (151) et la seconde partie d'extrémité (102) lorsque l'axe de rotation (152) passe à travers le disque de coupe (160).

3. Tondeuse à gazon robotique (100) selon l'une quelconque des revendications précédentes, dans laquelle les parois de protection (141, 142, 143, 144) sont partiellement positionnées entre le disque de coupe (160) et le sol (G) pendant un fonctionnement normal.

4. Tondeuse à gazon robotique (100) selon l'une quelconque des revendications précédentes, dans laquelle les parois de protection (141, 142, 143, 144) suivent au moins principalement des arcs de paroi de protection (141a, 142a, 143a, 144a) respectifs, où tous les arcs de paroi de protection (141a, 142a, 143a, 144a) ont un centre (146) commun.

5. Tondeuse à gazon robotique (100) selon la revendication 5, dans laquelle le centre (146) commun est le centre de l'axe de roue motrice (145).

6. Tondeuse à gazon robotique (100) selon l'une quelconque des revendications précédentes, dans laquelle une extension arquée d'au moins une paroi de protection (141, 142, 143), suivant au moins principalement un arc de paroi de protection (141a, 142a, 143a, 144a) respectif, comprend des parties d'extrémité effilées (147, 148, 149).

7. Tondeuse à gazon robotique (100) selon l'une quelconque des revendications précédentes, dans laquelle le second agencement de moteur électrique (165) est positionné plus près de l'axe de roue motrice (145) que de l'axe de rotation (152).

8. Tondeuse à gazon robotique (100) selon l'une quelconque des revendications précédentes, dans laquelle l'unité de commande (110) est configurée pour
commander la tondeuse à gazon robotique (100a) pour qu'elle se déplace vers une limite (182, 220) de telle sorte que la première partie d'extrémité (101) s'approche de la limite (182, 220) ;
déterminer si une distance jusqu'à la limite (182, 220) satisfait une condition ; et lorsque tel est le cas, l'unité de commande (110) est configurée pour
arrêter la tondeuse à gazon robotique (100b) ; et pour
commander les roues motrices (130a, 130b) pour qu'elles tournent dans des directions mutuellement différentes de telle sorte que la seconde partie d'extrémité (102) de la tondeuse à gazon robotique (100c, 100d) réalise un déplacement en arc de cercle le long d'un arc de coupe (210), permettant au disque de coupe (160) de couper le gazon à l'intérieur de l'arc de coupe (210).

9. Tondeuse à gazon robotique (100) selon la revendication 8, dans laquelle le centre de l'arc de coupe (210) est positionné le long de l'axe de roue motrice (145).

10. Tondeuse à gazon robotique (100) selon la revendication 9, dans laquelle le centre de l'arc de coupe (210) est positionné au centre (146) de l'axe de roue motrice (145).

11. Tondeuse à gazon robotique (100) selon l'une quelconque des revendications 8 à 10, dans laquelle la limite se présente sous la forme d'un câble de délimitation (220) définissant une zone de fonctionnement de la tondeuse à gazon robotique (100), où l'unité de commande (110) est configurée pour arrêter la tondeuse à gazon robotique (100) lorsque la tondeuse à gazon robotique (100) est positionnée sur le câble de délimitation (220), où la condition se rapporte à une distance déterminée entre le câble de délimitation (220) et la tondeuse à gazon robotique (100) tombant en dessous d'un premier seuil.

12. Tondeuse à gazon robotique (100) selon l'une quelconque des revendications 8 à 11, dans laquelle la limite se présente sous la forme d'un objet (182), où l'arc de coupe a une partie d'arc la plus proche (211) qui est la plus proche de l'objet (182), où la condition se rapporte à une distance déterminée entre l'objet (182) et la tondeuse à gazon robotique (100) tombant en dessous d'un second seuil.

13. Tondeuse à gazon robotique (100) selon l'une quelconque des revendications 8 à 10, dans laquelle la condition se rapporte à la tondeuse à gazon robotique (100) entrant en contact avec l'objet (182).
